# EUROPÄISCHE PATENTSCHRIFT

(11) **EP 0 419 999 B1**
(45) Veröffentlichungstag und Bekanntmachung des Hinweises auf die Patenterteilung: **21.07.1993**
(21) Anmeldenummer: 90117891.3
(22) Anmeldetag: 18.09.1990
(51) Int. Cl.: F02F 1/20, F16J 1/02, B23K 26/00

(54) **Verfahren zur Bearbeitung von durch Reibung hochbeanspruchten Flächen in Brennkraftmaschinen**
Method for working friction stressed surfaces in internal combustion engines
Méthode de façonnage des surfaces chargées par friction des moteurs à combustion interne

(30) Priorität: 28.09.1989 DE 3932328
(43) Veröffentlichungstag der Anmeldung: 03.04.1991
(73) Patentinhaber: Adam Opel Aktiengesellschaft, 65428 Rüsselsheim (DE); General Motors Espana, S.A., Figueruelas (Zaragoza) (ES)
(72) Erfinder: Richter, Klaus, Dipl.-Ing, W-6085 Nauheim (DE); Barton, Georg, Dr.-Ing., W-6090 Rüsselsheim (DE)
(74) Vertreter: Bergerin, Ralf, Dipl.-Ing.

(56) Entgegenhaltungen:
- US-A- 4 323 401
- LASER FOCUS. vol. 23, no. 5, 01 Mai 1987, TULSA US Seiten 54 - 70; ZNOTINS,T.A.: "EXCIMER LASERS: AN EMERGING TECHNOLOGY IN MATERIALS PROCESSING"
- JOURNAL OF METALS - JOM. vol. 39, no. 2, 01 Februar 1987, NEW YORK US Seiten 14 - 17; PEDRAZA,A.J.: "EXCIMER LASERS PROCESSING OF METALS"

## Beschreibung

Die Erfindung bezieht sich auf ein Verfahren zur Bearbeitung von durch Reibung hochbeanspruchten Flächen in Brennkraftmaschinen, insbesondere der Zylinderlaufflächen von Kolbenmotoren, wobei die Fläche gehont und zusätzlich einer Laserstrahlbehandlung unterzogen wird.

Durch das Honen der Laufflächen von Zylinderblöcken (die aus Gußeisen bestehen oder als Aluminium-Legierung mit Beschichtung ausgeführt sein können) wird eine standige Schmierung der Gleitpaarung Kolben/Zylinder, wie auch ein geringer Reibwert, erreicht. Allerdings wird hierbei - bedingt durch die vorhandene Oberflächenstruktur - ein hoher Einlaufverschleiß und während der Einlaufzeit ein mehrfacher Ölverbrauch im Vergleich zur späteren Betriebszeit in Kauf genommen.

Ein Verfahren der eingangs bezeichneten Art ist durch die DE 30 29 215 A1 bekanntgeworden. Bei dem bekannten Verfahren wird vorausgesetzt, daß die gußeisernen Zylinderinnenwände eine Feinrillung mit nutartigen Rillen aufweisen, die wohl durch vorherige spanabhebende Bearbeitung der Zylinderinnenwände entstanden sind. Die erhabenen Bereiche zwischen den nutartigen Rillen sollen danach durch Honen bearbeitet werden, derart, daß sich dort glatte, nicht gehärtete, zylindrische Zylinderwandflächenteile ergeben. Die zwischen den gehonten Erhebungen liegenden Bodenbereiche der nutartigen Rillen dagegen sollen durch Laser- oder Elektronenstrahlen so behandelt werden, daß (nur) dort martensitisch gehärtete Zonen entstehen. Soweit bei dem bekannten Verfahren Laserstrahlen zum Einsatz kommen, handelt es sich dabei offenbar um den seinerzeit üblichen CO₂-Laser, mit dem durch Umwandlungshärten ohne Aufschmelzen der Oberfläche martensitisch gehärtete, verschleißmindernde Bahnen von bis zu 1 mm Tiefe erzeugt werden sollen.

Weiterhin sind aus Journal of Metals, 39 (1987) Febr., Nr. 2, Warrendale, PA, USA, S. 14 ff Oberflächenbehandlungsverfahren mittels Excimer-Lasern bekannt. Hier wird in allgemeiner Weise der Excimer-Laser als Werkzeug mit seinen Betriebsparametern (z. B. Wellenlänge 308 nm) sowie den verschiedenen Bearbeitungsmöglichkeiten beschrieben mit besonderer Betonung von Phasenumwandlungen des reinen Eisens und amorpher Schichten, die infolge der Behandlung mittels eines Excimer-Lasers entstehen können. Eine spezielle Behandlung rauher (gehonter) Oberflächen ist indessen hier nicht angesprochen.

Im Gegensatz dazu wird die Aufgabe der Erfindung darin gesehen, weder einen Laser zur martensitischen bzw. ledeburitischen Umschmelzhärtung der Fläche, insbesondere der Zylinderlauffläche, zu verwenden noch einen Excimer-Laser in konventioneller Weise zur Oberflächenbehandlung einzusetzen, sondern zum Abtragen (hauptsächlich durch Abdampfen) der herausragenden Rauhigkeitsspitzen oder Verschuppungen, lose anhaftender Partikel aus der mechanischen Bearbeitung und zur Freilegung des mit dem sog. Blechmantel verdeckten Graphits.

Gemäß der Erfindung wird diese Aufgabe dadurch gelöst, daß die Laserstrahlbehandlung nach vorherigem Honen durch einen gepulsten sogenannten Excimer-Laser (10, 11) mit einer Wellenlänge unterhalb 100 nm, vorzugsweise 308 nm, erfolgt, wobei die Fläche durch Oberflächenabdampfung eine Glättung der Mikroriefen erfährt, zugleich aber die ölfördernden Makroriefen (Hohnriefen) geglättet erhalten bleiben.

Derartige Excimer-Laser unterscheiden sich von den herkömmlichen CO₂-Lasern dadurch, daß sie nicht im kontinuierlichen Betrieb arbeiten, sondern Pulse hoher Energie mit sehr kurzer Pulsdauer (einige Nanosenkunden) aussenden. Die behandelte Oberfläche erfährt dadurch kurzzeitig eine hohe Temperatur (bis 7000° C), die hauptsächlich zum Abdampfen einer dünnen Oberflächenschicht führt. Die durch Honen erzeugten, lose auf der Oberfläche anhaftenden Werkstoffpartikel sowie Verschuppungen werden ebenfalls abgedampft, da diese sich stärker erwärmen, weil sie die Wärme nur schlecht n die Matrix weiterleiten können.

Eine Excimer-Laserbehandlung bewirkt demzufolge vorteilhafterweise ein Mikroglätten der Oberfläche, beseitigt lose anhaftende Materialpartikel, Verschuppungen und legt die verdeckten Graphitlamellen frei. Die Honriefen bleiben nach dieser Behandlung erhalten. Eine leichte Anschmelzung der Oberfläche ist bei der Excimer-Exposition unvermeidlich. Es kommt jedoch nicht zur Ausbildung einer meßbaren martensitischen Randschicht infolge Umwandlungshärtung wie auch nicht zur Ausbildung einer ledeburitischen Randschicht infolge des Umschmelzens mittels eines CO₂-Laser, sondern zur Bildung einer im Nanometerbereich (< 1 µm) dünnen, meist übersättigten bzw. harten, nicht-gleichgewichtsphasen-enthaltende Haut auf der Oberfläche.

Neben dem Mikroglättungseffekt, der den Einlaufverschleiß der Zylinderlaufbuchse stark herabsetzt, wird durch die harte, übersättigte Umschmelzhaut die Verschleißbeständigkeit der Honung überhaupt erhöht. Das sich in Lösung bzw. Übersättigung befindende Cr in der Umschmelzhaut wirkt außerdem stark korrosionshemmend gegenüber Feuchtigkeit und den Verbrennungsprodukten.

Zusammenfassend gesagt liegen die Vorteile der erfindungsgemäßen Bearbeitung mit Excimer-Laser darin, daß ein Abtragen, hauptsächlich der herausragenden Rauhigkeitsbereiche (Rauhigkeitsspitzen), der Verschuppungen und lose anhaftender Bearbeitungspartikel sowie eine Graphitfreilegung auf nicht mechanischem Wege (wie das beim sogenannten "Bürsthonen" der Fall ist), d. h. berührungslos in sehr kurzen Behandlungzeiten möglich ist, ohne die vorhandenen und notwendigen Honriefen zu zerstören. Der Einlaufverschleiß wird dadurch wesentlich verringert, wodurch auch die Einlaufphase verkürzt wird. Dadurch wiederum wird der übliche hohe Ölverbrauch in der Einlaufzeit gesenkt und eine umweltfreundlichere Verbrennung gewährleistet.

Sofern es sich um eine Kolbenkraftmaschine mit Katalysatorabgasreinigung handelt, wird durch die Erfindung der vorteilhafte Sekundäreffekt erzielt, daß sich - als Folge des verringerten Ölverbrauchs in der Einlaufzeit - Effizienz und Lebensdauer des Katalysatorträgers wesentlich erhöhen.

Eine vorteilhafte Ausgestaltung des erfindungsgemäßen Verfahrens ist dem Patentanspruch 2 zu entnehmen.

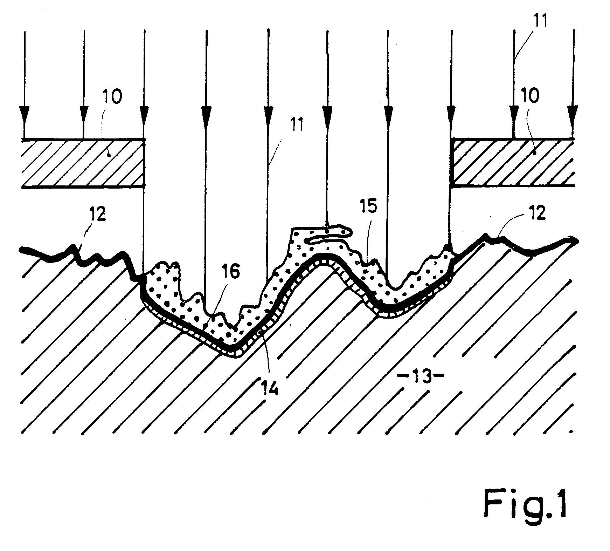

In der Zeichnung Fig. 1 ist - anhand einer schematischen und gegenüber den natürlichen Abmessungen stark vergrößerten Schnittdarstellung - eine durch Excimer-Laserbehandlung erzeugte Oberflächenstruktur als Ausführungsbeispiel der Erfindung gezeigte während die Figuren 2 und 3 eine solche Oberflächenstruktur am Beispiel einer gehonten Zylinderoberfläche jeweils in einer rasterelektronenmikroskopischen Aufnahme zeigen.

Es bezeichnet 10 die Maske und 11 die Strahlen eines für sich bekannten und daher nicht näher dargestellten Excimer-Lasers. Es kann sich hierbei um einen Laser mit einer Wellenlänge < 1100 nm, vorzugszweise um einen XeCL-Laser mit einer Wellenlänge von 308 nm, um einen Xe₂F-Laser mit einer Wellenlänge von 245 bis 610 nm bzw. ArF-Laser mit 193 nm handeln.

Derartige Excimer-Laser haben gegenüber den herkömmlichen CO₂-Lasern eine mehrfach größere Ergiebigkeit, da sie im defokussierten Zustand eine größere Fläche mit einer Pulsrate bis 1000 pro Sekunde zu bearbeiten vermögen. Die Verwendung derartiger Excimer-Laser wird des weiteren dadurch begünstigt, daß sie für den Einsatz sowohl einer sogenannten LWL-Optik wie auch einer Spiegeloptik geeignet sind.

Die Laser-Bearbeitungsbahnen auf den zylindrischen Honflächen können spiralförmig durch einfahren und Drehbewegung oder - meanderförmig - nur durch Einfahren und zyklische Drehbewegung der Optik realisiert werden.

Durch Erzeugung eines umgelenkten radialen Strahles in vollem 360°-Umfang kann eine Zylinderlauffläche durch ein Einfahren des ringförmigen Umlenkspiegels ohne Drehbewegung oder eines Facettenspiegels mit Drehbewegung realisiert werden.

Alternativ ist auch eine Anlage denkbar, die eine der Zylinderzahl des Motorblocks entsprechende Optikanzahl aufweist. In diesem Fall kann die Bearbeitung durch einmaliges Einfahren aller Optiken gleichzeitig erfolgen.

Wie die Zeichnung erkennen läßt, wird die Mikroriefenkontur 12 einer zunächst durch Honen bearbeitenden Fläche 13, z. B. der Zylinderlauffläche eines Kolbenmotors, durch die Laserstrahlbehandlung so verändert, daß einerseits eine geschmolzene Schicht 14 und andererseits eine abgedampfte Schicht 15 auf der Oberfläche entsteht. Die angeschmolzene Schicht 14 entsteht durch ein Schmelzen einer sehr dünnen Oberflächenschicht mit einer Dicke von ca. 0,01 - 3 µm, die infolge der großen Abschreckrate, wie evtl. auch durch Auflegieren aus der Gasphase zusätzlich eine erhöhte Verschleißbeständigkeit der Oberfläche bewirkt.

Was die abgedampfte Schicht 15 betrifft, so entsteht diese durch ein Abdampfen der Rauhigkeitsspitzen bzw. der herausragenden Partikel der durch Honen bearbeitenden Oberfläche 12. Die Mikroriefen der gehonten Oberfläche 12 werden hierbei geglättet, die Honriefen (Makroriefen) bleiben jedoch erhalten. Die unter der abgedampften Schicht 15 entstehende Haut zeichnet sich durch eine erhöhte Verschleiß- und Korrosionsbeständigkeit aus. Die nach Laserexposition entstehende Makroriefenkontur ist in der Zeichnung mit 16 beziffert.

Im übrigen sind die Behandlungsparameter des eingesetzten Excimer-Lasers (Pulsenergie, Pulslänge, Pulszahl, Repititionsrate, Strahlüberlappung der behandlten Oberfläche usw.) in Abhängigkeit des gehonten Werkstoffes, der Hontiefe sowie der Art der verwendeten Honleisten zu optimieren.

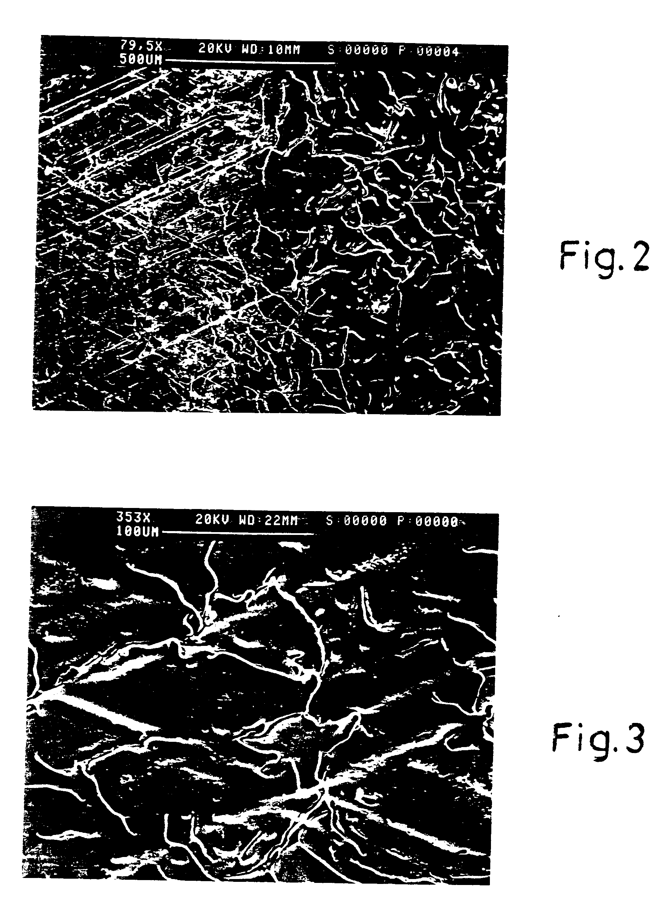

Fig. 2 zeigt als Aufnahme unter dem Rasterelektronenmikroskop in der linken Bildhälfte eine gehonte Oberflächenstruktur einer Zylinderlauffläche im Ausschnitt und in der rechten Bildhälfte diese Struktur nach erfolgter Excimer-Laser-Behandlung.

In Fig. 3 ist die rechte Bildhälfte aus Fig. 2 nochmals vergrößert dargestellt. Die Honriefen bleiben erhalten, die Graphitlamellen werden freigelegt.

## Patentansprüche

1. Verfahren zur Bearbeitung von durch Reibung hochbeanspruchten Flächen in Brennkraftmaschinen, insbesondere der Zylinderlaufflächen von Kolbenmotoren, wobei die Fläche gehont und zusätzlich einer Laserstrahlbehandlung unterzogen wird, **dadurch gekennzeichnet**, daß die Laserstrahlbehandlung nach vorherigem Honen durch einen gepulsten sogenannten Excimer-Laser (10, 11) mit einer Wellenläge unterhalb 1100 nm, vorzugsweise 308 nm, erfolgt, wobei die Fläche durch Oberflächenabdampfung eine Glättung der Mikroriefen erfährt, zugleich aber die ölfördernden Makroriefen (Honriefen) geglättet erhalten bleiben.

2. Verfahren nach Anspurch 1, **dadurch gekennzeichnet**, daß die infolge Abdampfens entstehende dünne Oberflächenhaut durch eine Legierungs-Gasatmosphäre während der Laserstrahlbehandlung zusätzlich um ein bzw. mehrere Legierungselemente angereichert wird.

## Claims

1. Method for treating surfaces of internal combustion engines which are subjected to intense friction, in particular the cylinder running surfaces of piston engines, in which the surface is honed and additionally subjected to a laser beam treatment, **characterised** in that the laser beam treatment takes place, after first honing, by means of a pulsed so-called excimer laser (10, 11) at a wavelength of below 1100 nm, preferably 308 nm, in which through surface evaporation the surface receives a smoothing of the microscopic grooves whilst at the same time retaining in a smoothed condition the oil-conveying macroscopic grooves (honing grooves).

2. Method according to claim 1, **characterised** in that the thin surface skin produced as a result of evaporation is additionally enriched by one or more alloying elements through an alloying gas atmosphere.

## Revendications

1. Procédé pour usiner des surfaces fortement sollicitées par frottement dans des moteurs à combustion interne, notamment pour usiner des surfaces internes de cylindres de moteurs à pistons(s), dans lequel la surface subit un pierrage ou honing puis un traitement par rayon laser, **caractérisé** par le fait qu'après honing préalable, le traitement par rayon laser est effectué par un laser pulsé de type dit excimer (10, 11) ayant une longueur d'onde inférieure à 1100 nm, de préférence 308 nm, la surface subissant, par évaporation superficielle, un lissage des microstries, tandis que les macrostries (stries de honing) retenant l'huile subsistent toutefois lissées.

2. Procédé selon la revendication 1, **caractérisé** par le fait que, pendant le traitement par rayon laser, la mince peau superficielle qui se forme sous l'effet de l'évaporation est en outre enrichie d'un ou plusieurs éléments d'alliage par une atmosphère gaz-alliage.
